(19) Europäisches Patentamt
European Patent Office
Office européen des brevets

(11) Veröffentlichungsnummer: **0 001 427**
**B1**

(12) # EUROPÄISCHE PATENTSCHRIFT

(21) Anmeldenummer: **78100983.2**

(22) Anmeldetag: **25.09.78**

(51) Int. Cl.³: **C 07 C 79/35,**
A 01 N 33/22,
C 07 C 76/02

(54) **2,6-Dichlor-3'-fluor-4-trifluormethyl-6'-nitrodiphenyläther, ein Verfahren zu dessen Herstellung sowie dessen Verwendung als Entblätterungsmittel bei Baumwolle**

(30) Priorität: **06.10.77 DE 2745005**

(43) Veröffentlichungstag der Anmeldung:
**18.04.79 Patentblatt 79/08**

(45) Bekanntmachung des Hinweises auf die Patenterteilung:
**17.09.80 Patentblatt 80/19**

(84) Benannte Vertragsstaaten:
**BE CH DE FR GB NL**

(56) Entgegenhaltungen:
**DD - A - 111 069**
**DE - A - 2 311 638**
**DE - A - 2 366 039**
**DE - A - 2 407 915**
**GB - A - 1 390 295**

(73) Patentinhaber: **BAYER AG**
**Zentralbereich Patente, Marken und Lizenzen**
**D - 5090 Leverkusen 1, Bayerwerk (DE)**

(72) Erfinder: **Klusacek, Hans, Dr.**
**Im Weingartskamp 40**
**D - 5000 Köln (DE)**
**Klauke, Erich, Dr.**
**Eichendorffweg 8**
**D - 5068 Odenthal (DE)**
**Lürssen, Klaus, Dr.**
**August-Kierspel-Strasse 89**
**D - 5060 Bergisch Gladbach (DE)**
**Roessler, Peter, Dr.**
**Elsterstrasse 15**
**D - 5060 Bergisch Gladbach (DE)**

**EP 0 001 427 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

2,6-Dichlor-3′-fluor-4-trifluormethyl-6′-nitrodiphenyläther, ein Verfahren zu dessen Herstellung sowie dessen Verwendung als Entblätterungsmittel bei Baumwolle

Die vorliegende Erfindung betrifft den neuen 2,6-Dichlor-3′-fluor-4-trifluormethyl-6′-nitrodiphenyläther, ein Verfahren zu dessen Herstellung sowie dessen Verwendung als Entblätterungsmittel bei Baumwolle.

Es ist bereits bekannt geworden, daß S,S,S-Tributylphosphortrithioat als Entblätterungsmittel bei Baumwolle eingesetzt werden kann (vgl. US-Patentschriften 2 841 486 und 2 965 467). Die Wirkung dieses Stoffes ist jedoch bei niedriger Dosierung nicht immer ganz befriedigend, vor allem deshalb nicht, weil der Wiederaustrieb von Blättern bei den Baumwollpflanzen nicht verhindert wird. Die Verbindung ist ferner wegen ihres intensiven Geruches in der Handhabung unangenehm.

Aus den DE—OSS 23 66 039 und 24 07 915 sind Diphenyläther bekannt, die (zumindest teilweise) einen in 2- und 6-Stellung durch Halogen und in 4-Stellung durch Trifluormethyl substituierten Phenylrest enthalten, wobei die Nitro-Gruppe in dem anderen Phenylring zwingend in der 3′-Position gebunden ist. Entsprechende Stoffe, in denen die Nitro-Gruppe in der 6′-Position fixiert ist, werden jedoch nicht offenbart.

Einige Diphenyläther, welche eine Nitro-Gruppe in der 6′-Position tragen, sind in der DD—PS 111 069 beschrieben. In keiner der dort aufgeführten Verbindungen ist allerdings eine Trifluormethyl-Gruppe vorhanden. Ferner kann derjenige Phenylrest, der die Nitro-Gruppe trägt, nicht gleichzeitig durch Fluor substituiert sein.

Aus den DE—OSS 23 66 039 und 24 07 915 sowie der DD—PS 111 069 geht weiterhin hervor, daß die dort aufgeführten Diphenyläther herbizide bzw. biozide Aktivität besitzen. Eine Verwendung dieser Stoffe als Defoliants, insbesondere zur Entblätterung von Baumwolle, wird jedoch nicht erwähnt.

Gegenstand dieser Erfindung ist der neue 2,6-Dichlor-3′-fluor-4-trifluormethyl-6′-nitrodiphenyläther der Formel

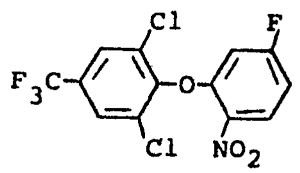

(I)

Gegenstand der Erfindung ist auch ein Verfahren zur Herstellung des 2,6-Dichlor-3′-fluor-4-trifluormethyl-6′-nitro-diphenyläthers der Formel (I) durch Umsetzung von 2,6-Dichlor-4-trifluormethylphenol der Formel

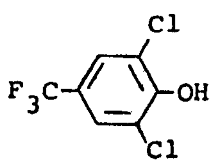

(II)

mit 2,4-Difluor-nitrobenzol der Formel

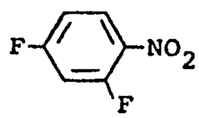

(III)

unter wasserfreien Bedingungen in Gegenwart eines Säureakzeptors sowie in Gegenwart eines Verdünnungsmittels.

Gegenstand der Erfindung ist ferner die Verwendung des 2,6-Dichlor-3′-fluor-4-trifluormethyl-6′-nitro-diphenyläthers der Formel (I) zur Entblätterung von Baumwoll-Pflanzen, zur Verhinderung des Wiederaustriebes bei Baumwoll-Pflanzen sowie zur Austrocknung (Desiccation) der Blätter von Baumwoll-Pflanzen.

Überraschenderweise eignet sich der 2,6-Dichlor-3′-fluor-4-trifluormethyl-6′-nitro-diphenyläther besser zur Entblätterung von Baumwoll-Pflanzen als das aus dem Stand der Technik bekannte S,S,S-Tributyl-phosphortrithioat, welches ein anerkannt gut wirksamer Stoff gleicher Wirkungsart ist. Die erfindungsgemäße Verbindung stellt somit eine wertvolle Bereicherung der Technik dar.

Die gute Verwendbarkeit des erfindungsgemäßen Wirkstoffes für den angegebenen Zweck konnte nicht erwartet werden, denn von den konstitutionell ähnlichsten vorbeschriebenen Stoffen waren nur herbizide bzw. biozide Eigenschaften bekannt (vgl. DE—OSS 23 66 039 und 24 07 915 sowie DD—PS 111 069). Außerdem unterscheidet sich der erfindungsgemäße Wirkstoff in signifikanter Weise bezüglich des Substitutionsmusters in dem Phenylring, der keine Trifluormethylgruppe trägt, von dem der zahlreichen vorbekannten herbizid wirksamen Verbindungen, nämlich hinsichtlich der Stellung der Nitro-Gruppe.

Die Herstellung des 2,6-Dichlor-3'-fluor-4-trifluormethyl-6'-nitro-diphenyläthers durch Umsetzung von 2,6-Dichlor-4-trifluormethylphenol mit 2,4-Difluor-nitrobenzol in Gegenwart von Kaliumhydroxid läßt sich durch das folgende Formelschema veranschaulichen:

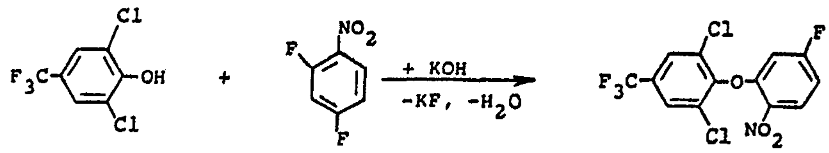


Die bei der Herstellung des 2,6-Dichlor-3'-fluor-4-trifluormethyl-6'-nitro-diphenyläthers als Ausgangsstoffe benötigten Verbindungen der Formeln (II) und (III) sind bereits bekannt (vgl. Chem. Ind. (London) *1962*, No. 29, 1328—1329 und DT—OS 2 407 148).

Bei der Durchführung des erfindungsgemäßen Verfahrens können als Säureakzeptoren übliche Säurebindemittel fungieren. Hierzu gehören vorzugsweise Alkalihydroxide, wie Kaliumhydroxid und Natriumhydroxid.

Als Verdünnungsmittel können bei der erfindungsgemäßen Umsetzung inerte, hochsiedende organische Lösungsmittel verwendet werden. Hierzu gehören vorzugsweise Dimethylsulfoxid und Tetramethylensulfon.

Die Reaktionstemperaturen können bei der erfindungsgemäßen Umsetzung in einem größeren Bereich variiert werden. Im allgemeinen arbeitet man bei Temperaturen zwischen 80°C und 140°C, vorzugsweise zwischen 100°C und 120°C.

Wasserfreie Bedingungen lassen sich bei dem erfindungsgemäßen Verfahren in der Weise erreichen, daß man aus dem 2,6-Dichlor-4-trifluormethylphenol und einem Säureakzeptor ein Phenolat herstellt und letzteres dann mit 2,4-Difluornitrobenzol zur Reaktion bringt. Verwendet man ein Alkalihydroxid als Säureakzeptor, so wird das bei der Umsetzung entstehende Wasser zweckmäßigerweise unter Zuhilfenahme von organischen Lösungsmitteln, wie z.B. Toluol oder Benzol, azeotrop abdestilliert.

Bei der Durchführung des erfindungsgemäßen Verfahrens setzt man auf 1 Mol 2,6-Dichlor-4-trifluormethylphenol 1 Mol 2,4-Difluor-nitrobenzol sowie eine äquivalente Menge an Säurebindemittel ein.

Die Isolierung des Reaktionsproduktes erfolgt nach üblichen Methoden. Im allgemeinen verfährt man in der Weise, daß man nach beendeter Umsetzung zunächst das Lösungsmittel abdestilliert, den verbleibenden Rückstand mit Wasser versetzt, dann mit einem organischen Lösungsmittel, wie z.B. Methylenchlorid extrahiert, anschließend die organische Phase trocknet und einengt. Der dabei anfallende Rückstand enthält neben dem 2,6-Dichlor-3'-fluor-4-trifluormethyl-6'-nitro-diphenyläther auch den 2,6-Dichlor-3'-fluor-4-trifluormethyl-4'-nitro-diphenyläther. Der 2,6-Dichlor-3'-fluor-4-trifluormethyl-6'-nitro-diphenyläther läßt sich durch mehrfaches Umkristallisieren des Rohproduktes aus einem geeigneten organischen Lösungsmittel, z.B. Hexan, rein isolieren.

Der erfindungsgemäße Wirkstoff induziert den Blattabwurf bei Pflanzen und kann insbesondere als Entblätterungsmittel bei Baumwollpflanzen, zur Verhinderung des Wiederaustriebes und zur Austrocknung der Blätter bei Baumwollpflanzen verwendet werden.

Der Wirkstoff kann in die üblichen Formulierungen übergeführt werden, wie Lösungen, Emulsionen, Spritzpulver, Suspensionen, Pulver, Stäubemittel, Schäume, Pasten, lösliche Pulver, Granulate, Aerosole, Suspensions-Emulsionskonzentrate, Saatgutpuder, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder fasten Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel; als Emulgier- und/oder schaumerzeugende Mittel: nich ionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Der erfindungsgemäße Wirkstoff kann in den Formulierungen in Mischung mit anderen bekannten Wirkstoffen vorliegen, wie Fungizide, Insektizide, Akarizide und Herbizide.

Der Wirkstoff kann als solcher in Form seiner Formulie-rungen oder der daraus bereiteten Anwendungsformen, wie gebrauchsfertige Lösungen, emulgierbare Konzentrate, Emulsionen, Schäume, Suspensionen, Spritzpulver, lösliche Pulver, Stäubemittel, angewendet werden. Die Anwendung geschieht in üblicher Weise, z.B. durch Gießen, Verspritzen, Versprühen, Verstäuben, Verschäumen, Begasen usw. Es ist ferner möglich, den Wirkstoff nach dem Ultra-Low-Volume-Verfahren auszubringen.

Bei einer Anwendung des Wirkstoffes zur Entblätterung von Baumwollpflanzen bzw. zur Verhinderung des Wiederaustriebes oder zur Austrocknung der Blätter bei Baumwollpflanzen können die Wirkstoffkonzentrationen in einem größeren Bereich variiert werden. Im allgemeinen verwendet man Konzentrationen von 0,00005 bis 2%, orzugsweise von 0,0001 bis 0,2%. Ferner verwendet man im allgemeinen pro Hektar Bodenfläche 0,01 bis 50 kg, bevorzugt 0,05 bis 10 kg Wirkstoff an.

Für die Anwendungszeit des Wirkstoffes bei Baumwolle gilt, daß die Anwendung in einem bevorzugten Zeitraum vorgenommen wird, dessen genaue Abgrenzung sich nach den klimatischen und vegetativen Gegebenheiten richtet.

In dem nachfolgenden Beispiel wird die Verwendung des erfindungsgemäßen Stoffes als Mittel zur Entblätterung von Baumwollpflanzen sowie zur Verhinderung des Wiederaustriebes bei Baumwoll-Pflanzen dargestellt.

## Beispiel A

### Entblätterung, Wiederaustriebshemmung und Desiccation bei Baumwolle

Lösungsmittel: 10 Gewichtsteile Dimethylformamid
2 Gewichtsteile Polyoxyäthylen-Sorbitanmonolaurat

Zur Herstellung einer zweckmäßigen Wirkstoffzubereitung vermischt man 1 Gew.-Teil Wirkstoff mit den angegebenen Mengen Lösungsmittel und Emulgator und füllt mit Wasser auf die gewünschte Konzentration auf.

Baumwollpflanzen werden in Kunststofftöpfen von 1 l Inhalt bis zum Entfalten des 8. Blattes im Gewächshaus angezogen. Dann werden die Pflanzen mit den Wirkstoffzubereitungen bis zum Abtropfen der Spritzbrühe besprüht. Nach weiteren 8 Tagen werden der durch die Präparate induzierte Blattfall sowie der Wiederaustrieb bonitiert.

Es werden nebeneinander getestet:

1) eine Wirkstoff-freie Formulierung
2) das als Baumwoll-Entblätterungsmittel bekannte S,S,S-Tributyl-phosphortrithioat
3) der erfindungsgemäße Wirkstoff 2,6-Dichlor-3′-fluor-4-trifluormethyl-6′-nitro-diphenyläther.

Die Wirkstoffe werden in Konzentrationen von 0,2 und 0,05% eingesetzt.

In beiden Fällen eignet sich der erfindungsgemäße Wirkstoff besser zur Entblätterung der Baumwoll-Pflanzen als das S,S,S-Tributylphosphortrithioat. Ferner verhindert der erfindungsgemäße Wirkstoff den Wiederaustrieb von Blättern.

Sofern die Blätter nicht unter dem Einfluß des erfindungsgemäßen Wirkstoffes abfallen, trocknen sie doch völlig aus (Desiccant-Wirkung), ein gewünschter Effekt, der in diesem Ausmaß nicht durch S,S,S-Tributyl-phosphor-trithioat erzielt wird.

Herstellungsbeispiel

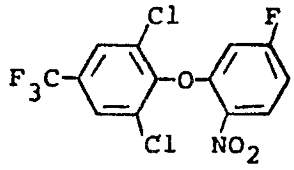

23,1 g (0,1 Mol) 2,6-Dichlor-4-trifluormethylphenol werden in 70 ml Tetramethylensulfon gelöst und mit 5,6 g (0,1 Mol) Kaliumhydroxid versetzt. Es werden 50 ml Toluol zugegeben, dann wird 2 Stunden lang das entstandene Reaktionswasser azeotrop abdestilliert. Anschließend wird das überschüssige Toluol abdestilliert. Zu der verbleibenden Mischung werden 15,9 g (0,1 Mol) 2,4-Difluornitrobenzol zugetropft. Nach beendeter Zugabe wird das Reaktionsgemisch 10 Stunden bei 120°C gerührt. Danach wird das Tetramethylensulfon unter vermindertem Druck ($10^{-2}$Torr) bei einer Badtemperatur von 160°C abdestilliert. Der Rückstand wird mit Wasser versetzt und mit Methylenchlorid extrahiert. Die organische Phase wird abgetrennt, über Natriumsulfat getrocknet und durch Kochen mit Aktivkohle geklärt. Nach dem Einengen der Lösung verbleiben 24 g (65% der Theorie) eines hellgelben Öles, das gemäß Gaschromatogramm zu 20% aus dem 2,6-Dichlor-3'-fluor-4-trifluormethyl-4'-nitrodiphenyläther und zu 80% aus dem 2,6-Dichlor-3'-fluor-4-trifluormethyl-6'-nitro-diphenyläther besteht. Durch mehrfaches Umkristallisieren dieses Produktes aus n-Hexan wird der 2,6-Dichlor-3'-fluor-4-trifluormethyl-6'-nitro-diphenyläther rein isoliert. Die Substanz weist einen Schmelzpunkt von 91°C auf.

**Patentansprüche**

1. 2,6-Dichlor-3'-fluor-4-trifluormethyl-6'-nitro-diphenyläther der Formel

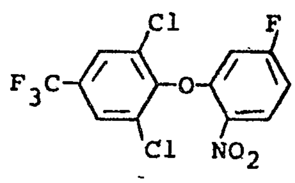

2. Verfahren zur Herstellung von 2,6-Dichlor-3'-fluor-4-trifluormethyl-6'-nitro-diphenyläther, dadurch gekennzeichnet, daß man 2,6-Dichlor-4-trifluormethylphenol der Formel

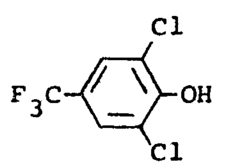

(II)

mit 2,4-Difluor-nitrobenzol der Formel

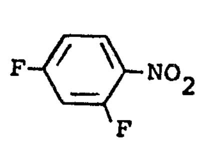

(III)

unter wasserfreien Bedingungen in Gegenwart eines Säureakzeptors sowie in Gegenwart eines Verdünnungsmittels umsetzt.

3. Mittel zur Entblätterung von Baumwollpflanzen, zur Verhinderung des Wiederaustriebes von Baumwoll-Pflanzen sowie zur Desiccation der Blätter von Baumwoll-Pflanzen, gekennzeichnet durch einen Gehalt an 2,6-Dichlor-3'-fluor-4-trifluormethyl-6'-nitrodiphenyläther gemäß Anspruch 1.

4. Verwendung von 2,6-Dichlor-3'-fluor-4-trifluormethyl-6'-nitrodiphenyläther gemäß Anspruch 1 zur Entblätterung von Baumwollpflanzen, zur Verhinderung des Wiederaustriebes von Baumwollpflanzen sowie zur Desiccation der Blätter von Baumwollpflanzen.

**Revendications**

1. 2,6-dichloro-3′-fluoro-4-trifluorométhyl-6′-nitro-diphényl-éther de formule:

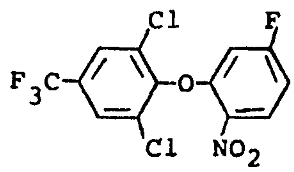

2. Procédé de préparation de 2,6-dichloro-3′-fluoro-4-trifluorométhyl-6′-nitrodiphényl-éther, caractérisé en ce qu'on fait réagir du 2,6-dichloro-4-trifluorométhylphénol de formule:

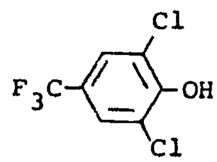

(II)

avec du 2,4-difluoro-nitrobenzène de formule:

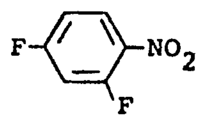

(III)

dans des conditions anhydres en présence d'un accepteur d'acide ainsi qu'en présence d'un diluant.

3. Agent pour la défoliation de plantes de coton, pour l'inhibition de la repousse de plantes de coton de même que pour la dessiccation des feuilles de plantes de coton, caractérisé par une teneur en 2,6-dichloro-3′-fluoro-4-trifluorométhyl-6′-nitrodiphényl-éther selon la revendication 1.

4. Utilisation du 2,6-dichloro-3′-fluoro-4-trifluorométhyl-6′-nitrodiphényl-éther selon la revendication 1 pour la défoliation des plantes de coton, pour l'inhibition de la repousse des plantes de coton de même que pour la dessiccation des feuilles de plantes de coton.

**Claims**

1. 2,6-Dichloro-3′-fluoro-4-trifluoromethyl-6′-nitrodiphenyl ether of the formula

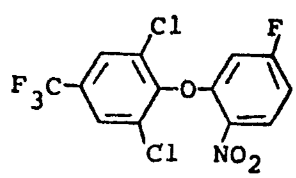

2. Process for the preparation of 2,6-dichloro-3′-fluoro-4-trifluoromethyl-6′-nitro-diphenyl ether, characterised in that 2,6-dichloro-4-trifluoromethylphenol of the formula

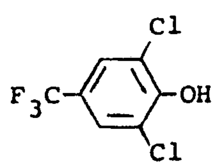

(II)

is reacted with 2,4-difluoro-nitrobenzene of the formula

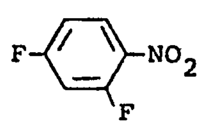

(III)

under anhydrous conditions in the presence of an acid acceptor and in the presence of a diluent.

3. Agent for defoliating cotton plants, for preventing resprouting of cotton plants and for desiccating the leaves of cotton plants, characterised in that it contains 2,6-dichloro-3′-fluoro-4-trifluoromethyl-6′-nitrodiphenyl ether according to Claim 1.

4. Use of 2,6-dichloro-3′-fluoro-4-trifluoromethyl-6′-nitro-diphenyl ether according to Claim 1 for defoliating cotton plants, for preventing resprouting of cotton plants and for desiccating the leaves of cotton plants.